Europäisches Patentamt

European Patent Office

Office européen des brevets

(19)

(11) Veröffentlichungsnummer: **0 018 477**

A1

(12) # EUROPÄISCHE PATENTANMELDUNG

(21) Anmeldenummer: 80101083.6

(22) Anmeldetag: 04.03.80

(51) Int. Cl.³: **H 02 K 33/18**

(30) Priorität: 25.04.79 DE 2916652

(43) Veröffentlichungstag der Anmeldung:
12.11.80 Patentblatt 80/23

(84) Benannte Vertragsstaaten:
DE FR GB

(71) Anmelder: International Business Machines Corporation
Armonk, N.Y. 10504(US)

(72) Erfinder: Seifert, Hans-Gordon, Dr.
Im Troppel 57
D-7031 Weil im Schönbuch(DE)

(74) Vertreter: Blutke, Klaus, Dipl.-Ing.
Schönaicher Strasse 220
D-7030 Böblingen(DE)

(54) Tauchspulenantrieb.

(57) Tauchspulenantrieb, bei dem die Bewegungsspule (3) zwischen zwei Magneten (1, 2) entgegengesetzter Magnetisierung angeordnet ist.

EP 0 018 477 A1

./...

FIG. 1

## Tauchspulenantrieb

Die Erfindung betrifft einen Tauchspulenantrieb. Es gibt eine Vielzahl von Tauchspulenantrieben, die Eines gemeinsam haben. Im "Luft"-Spalt (Füllung mit Flüssigkeit möglich) eines Magnetsystems ist eine Spule beweglich angeordnet. Auf den in der Spule fließenden Strom übt das Magnetfeld Kräfte aus, so daß die Spule bewegt wird.

Ein typischer Anwendungsbereich für einen solchen Tauchspulenantrieb ist der elektrodynamische Lautsprecher. Bei ihm ist ein konstantes Magnetfeld erforderlich, das entweder durch einen Dauermagneten oder einen Elektromagneten hervorgerufen und über Weicheisenelemente geführt wird. Im Luftspalt eines Topf-, Bügel- oder Ringmagnetsystems ist eine Spule beweglich angeordnet, die mit der Lautsprechermembran starr verbunden ist. Die in der Spule fließenden Sprech- oder Musikwechselströme erzeugen zusammen mit der Magnetflußdichte auf der Spule wirkende elektromagnetische Kräfte, so daß sie und die an ihr befestigte Membran dem Wechselstrom entsprechende Schwingungen ausführt. Diese Schwingungen werden damit hörbar.

Um eine definierte Bewegung der Spule im Magnetfeld zu erzeugen, müssen Betrag und Richtung der magnetischen Flußdichte in einer bestimmten Weise auf die in den Spulenwindungen fließenden Ströme einwirken, damit eine resultierende Kraftwirkung überhaupt zustande kommt. Befände sich eine einfache z. B. zylinderförmige Spule in einem homogenen Magnetfeld, so würden sich bei einem Stromfluß in der Spule die Kraftwirkungen gemäß dem Lorentz'schen Kraftgesetz aufheben und eine Bewegung käme nicht zustande. Da sich die Kraftwirkung aus der Stromflußrichtung im Spulenleiter und der Magnetfeldrichtung ergibt, müssen für eine definierte Spulenbewegung die Magnetfeldrichtungen für entgegengesetzte

GE 979 014E

- 2 -

Stromflußrichtungen in den Spulenwindungen entgegengesetzt sein. Aus diesem Grunde waren bisher verhältnismäßig aufwendige Anordnungen erforderlich, um dieser Bedingung Genüge zu tun. Wie später noch näher beschrieben, können diese Bedingungen dadurch erfüllt werden, daß im Arbeitsluftspalt eines z. B. ringförmig ausgebildeten Weicheisenkreises ein weiteres mit diesem Kreis verbundenes Magnetjoch vorgesehen wird, auf dem die Bewegungsspule freibeweglich angeordnet ist. Der magnetische Fluß dieses Kreises kann entweder durch einen Elektro- oder Permanentmagneten erzeugt werden. Des weiteren sind auch Anordnungen für Flachspulen möglich, bei denen die Flachspule zwischen zwei Magnetpolpaaren unterschiedlicher Magnetisierungsrichtung angeordnet ist. Anordnungen des zuvor beschriebenen Prinzips werden z. B. als elektromagnetische Betätigungsvorrichtungen für Matrixdrucker verwendet. Eine solche ist beispielsweise in der deutschen Offenlegungsschrift 2 015 122 beschrieben.

Es ist Aufgabe der Erfindung, eine Anordnung für einen Tauchspulenantrieb mit einem verringerten magnetischen Aufwand zur Erzeugung einer definierten Bewegungsrichtung der Spule anzugeben, wobei der Spuleninnenraum durch einen nicht magnetischen Werkstoff ausgefüllt sein kann. Diese Aufgabe der Erfindung wird in vorteilhafter Weise durch die im kennzeichnenden Teil des Anpruchs 1 angegebenen Maßnahmen gelöst.

Vorteilhafte Weiterbildungen der Erfindung sind den Unteransprüchen zu entnehmen. Ausführungsformen der Erfindung sind in den Zeichnungen dargestellt und werden im folgenden näher beschrieben.

GE 979 014E

- 3 -

Es zeigen:

Fig. 1  eine schematische Darstellung einer Tauchspule zwischen 2 Permanentmagneten mit einander entgegengesetzter Magnetisierungsrichtung;

Fig. 2  eine schematische Darstellung des Verlaufs der magnetischen Flußdichte zwischen den beiden Magneten gemäß Fig. 1;

Fig. 2b  eine schematische Darstellung der Kraftwirkungen an ausgewählten Punkten einer Leiterschleife zwischen dem Magneten gemäß Fig. 1 bzw. Fig. 2a;

Fig. 3a  eine schematische Darstellungsform eines Tauchspulensystemes nach dem Stand der Technik, bei dem ein zusätzlicher die Tauchspule tragender Magnetjochkern im Arbeitluftspalt einer Magnetanordnung vorgesehen ist;

Fig. 3b  eine schematische Darstellung einer Flachspulenbetätigungsvorrichtung, bei der eine Flachspule zwischen zwei Magnetpaaren unterschiedlicher Magnetisierungsrichtung angeordnet ist;

Fig. 4  eine schematische Darstellung einer elektromagnetischen Betätigungsvorrichtung mit einer Vielzahl von Tauchspulen, die zwischen zwei gemeinsamen Permanentmagneten angeordnet sind;

Fig. 5a  die Aufsicht einer schematischen Darstellung, bei der Tauchspulen zwischen zwei ringförmig angeordneten Magneten entgegengesetzter Magnetisierungsrichtung an Federauslenkgliedern angeordnet sind;

GE 979 014E

- 4 -

Fig. 5b eine schematische vereinfachte Schnittdarstellung der Anordnung gemäß Fig. 5a entlang der Schnittlinie A-A.

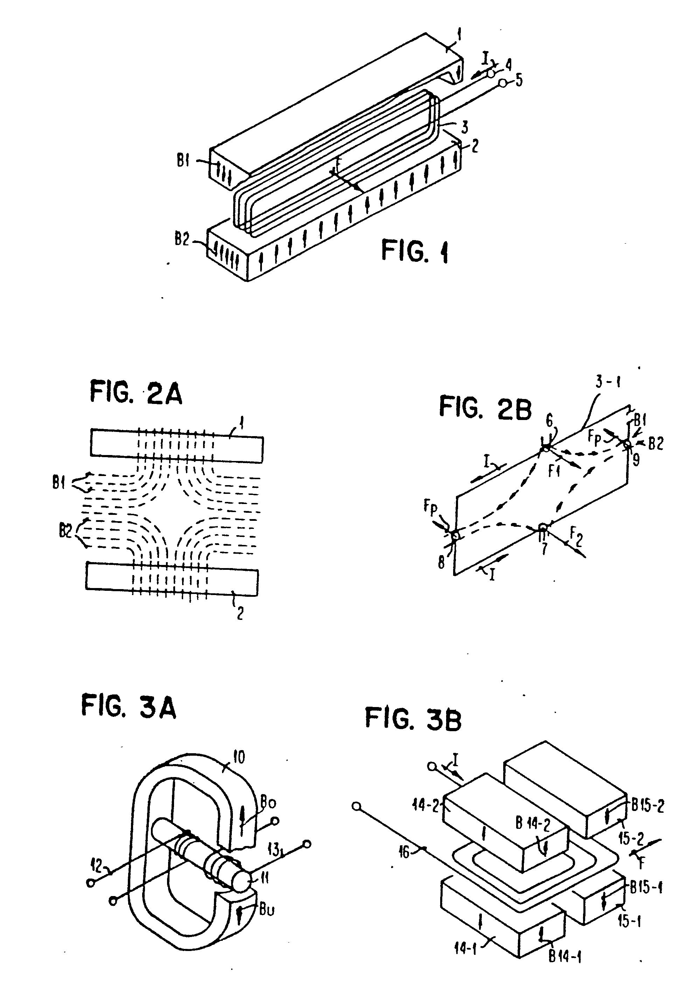

Zur Erklärung der Wirkungsweise der Erfindung sei zunächst auf die Wirkungsweise herkömmlicher Tauchspulensysteme nach dem Stand der Technik eingegangen. Es wird davon ausgegangen, daß sich auf eine stromdurchflossene in einem Magnetfeld befindliche Spule gemäß dem Lorentz'schen Gesetz eine Kraftwirkung ergibt, die sich nach der sogenannten Dreifingerregel durch die Richtung des Stromflusses und die Richtung der magnetischen Flußdichte ergibt. Das Magnetfeld kann durch Permanent- oder Elektromagneten vorgegeben sein. Da in einem homogenen Magnetfeld die Kraftrichtung auf die Spule von der Stromrichtung in den Spulenwindungen bestimmt wird, gibt es Spulenteile mit unterschiedlichen den Stromrichtungen entsprechenden Kraftwirkungen. Diese Kraftwirkungen würden sich hinsichtlich einer erwünschten Linearbewegung der Spule aufheben bzw. nur zu einer Verdrehung derselben führen, sofern die Spule in einem einfachen Magnetfeld angeordnet ist. Um diesen Effekt zu vermeiden, hat man gemäß Fig. 3a und 3b Möglichkeiten vorgesehen, das Aufheben der Kraftwirkungen auf die Spule bezüglich ihrer erwünschten Linearbewegung zu unterbinden. In Fig. 3a ist ein Elektromagnet mit einem Arbeitsluftspalt dargestellt. Der Elektromagnet besteht aus der Erregerwicklung 12 und einem mehrteiligen Magnetjoch. Die Erregerspule 12 sitzt auf dem Jochteil 11 und dem Jochteil 10. Die Enden des Jochteiles 10 bilden den Arbeitsluftspalt gegenüber dem Jochteil 11. Das andere Ende des Jochteiles 11 ist mit dem Jochteil 10 verbunden. Bei Erregung des Elektromagneten bildet sich im oberen Teil des Jochteiles 10 eine Magnetisierung angegebener Teilrichtung Bo und im unteren Ende eine Magnetisierung angegebener Pfeilrichtung Bu aus. Die beiden Magnetisierungsrichtungen Bo und Bu verlaufen entgegengesetzt. Auf

GE 979 014E

- 5 -

dem Jochteil 11 ist im Arbeitsluftspalt die Bewegungsspule 13 angeordnet. Wird sie stromdurchflossen, so erfährt sie eine Auslenkung in Richtung der Achse des Jochteiles 11. Die Kraftwirkungen auf die Spulenwindungsteile, welche dem oberen Teil des Arbeitsluftspaltes zugeordnet sind und die Kraftwirkungen auf die Spulenwindungsteile, welche dem unteren Teil des Arbeitsluftspaltes zugeordnet sind, heben bei dieser Anordnung einander nicht mehr auf, da die Magnetrichtung Bo und Bu entgegengesetzt einander verlaufen. Die Kraftwirkungen auf dem oberen und unteren Teil der Spule addieren sich zu der gewünschten Linearbewegung der Bewegungsspule 13 in Richtung der Achse des Jochteiles 11. Aus dieser Anordnung ist zu ersehen, daß für eine definierte Linearbewegung eine relativ aufwendige Magnetjochanordnung erforderlich ist.

Gemäß Fig. 3b wird zur Erzeugung einer definierten Linearbewegung der Flachspule 16 in Pfeilrichtung F 2 Paare von Permanentmagneten verwendet. Diese Flachspule 16 liegt mit den Windungsteilen der einen Stromrichtung zwischen dem Magnetpaar 14-1 und 14-2; mit den Windungsteilen entgegengesetzter Stromrichtung zwischen dem Magnetpaar 15-1 und 15-2. Diese Magnete sind schematisch als Permanentmagnete angegeben. Die Magnetisierung des ersten Magnetpaares 14-1 und 14-2 ist mit B 14-1 und B 14-2 angegeben, die Magnetisierung der Magnetpaare 15-1 und 15-2 mit B 15-1 und B 15-2. Die Magnetisierungsrichtungen beider Magnetpaare sind einander entgegengesetzt, damit sich die Kraftwirkungen auf die Windungsteile entsprechender Stromrichtung einander nicht aufheben und sich eine definierte Linearbewegung in Richtung F ergibt. Die Magnetisierungen der Magnete eines Polpaares sind jedoch gleich. In Fig. 1 ist die schematische Anordnung einer Tauchspule 3 zwischen 2 Permanentmagnete 1 und 2 gezeigt. Die Magnetisierungsrichtung des Magnetes 1 ist durch die Pfeile B1, die des Magneten 2 durch

GE 979 014E

- 6 -

die Pfeile B2 gezeigt. Beide Magnetisierungsrichtungen B1 und B2 sind parallel aber entgegengesetzt orientiert. Das die Tauchspule 3 durchsetzende Magnetfeld soll eine Linearbewegung der Spule in Pfeilrichtung F also senkrecht zum Magnetfeld und Stromverlauf in den Spulenwindungen hervorrufen. Die Anschlüsse der Tauchspule sind mit 4 und 5 gekennzeichnet. Die Stromrichtung durch die Spule mit dem Pfeil I. Durch die entgegengesetzte Magnetisierungsrichtung der Magnete 1 und 2 ergibt sich ein Verlauf, der magnetischen Flußdichte, wie er vereinfacht schematisch in Fig. 2a dargestellt ist. Die Magnetlinien verlaufen nicht von dem einen Magneten 1 zum anderen Magneten 2, wie es der Fall wäre, wenn deren Magnetisierungsrichtungen gleich orientiert wären, sondern sie folgen einem Verlauf wie er für abstoßende Potentiale typisch ist. Zur vereinfachten Betrachtung der auf die Spulenwindungen wirkenden Kräfte ist in Fig. 2B eine einfache Spulenwindung 3-1 dargestellt. Im folgenden werden die Kraftrichtungen auf die Punkte 6, 7, 8 und 9 betrachtet. Bei vorgegebener Stromrichtung I und entsprechend vorgegebenem Verlauf der magnetischen Flußdichte (gestrichelte Linie B1 und B2) ergeben sich gemäß der sogenannten Dreifingerregel für die Punkte 6 und 7 Kraftwirkungen, die durch die Pfeile F1 und F2 gekennzeichnet sind. Beide Kräfte F1 und F2 haben gleiche Orientierung; sie sind für die erwünschte Linearbewegung der Tauchspule maßgebend. Die Kraftwirkungen in den Punkten 8 und 9, welche auf den kürzeren Windungsteilen liegen, welche zur gewünschten Linearbewegung der Spule nicht beitragen, sind durch die Pfeile Fp gekennzeichnet. Diese Kräfte Fp verlaufen entgegengesetzt zu den Kräften F1 und F2. Die Kräfte Fp sind bedingt durch die kürzere Seitenlänge vergleichsweise bedeutend geringer als die Kräfte F1 und F2 und bewirken eine Bewegungskomponente entgegengesetzt zur erwünschten Tauchspulenbewegung gemäß den Kräften F1 und F2. In dieser Darstellung wird es deutlich, daß sich die Kräfte F1 und F2 die

GE 979 014E

gleiche Wirkungsrichtung haben, wodurch überhaupt die Linearbewegung der Tauchspule ermöglicht wird. Wären die Magnetisierungsrichtungen der Magnete 1 und 2 gemäß Fig. 1 gleichgerichtet, würden die Kräfte F1 im Punkt 6 entgegengesetzt zu einer nicht dargestellten Kraft im Punkt 7 verlaufen und somit nie eine Linearbewegung der Spule bedingen sondern allenfalls ein Drehmoment.

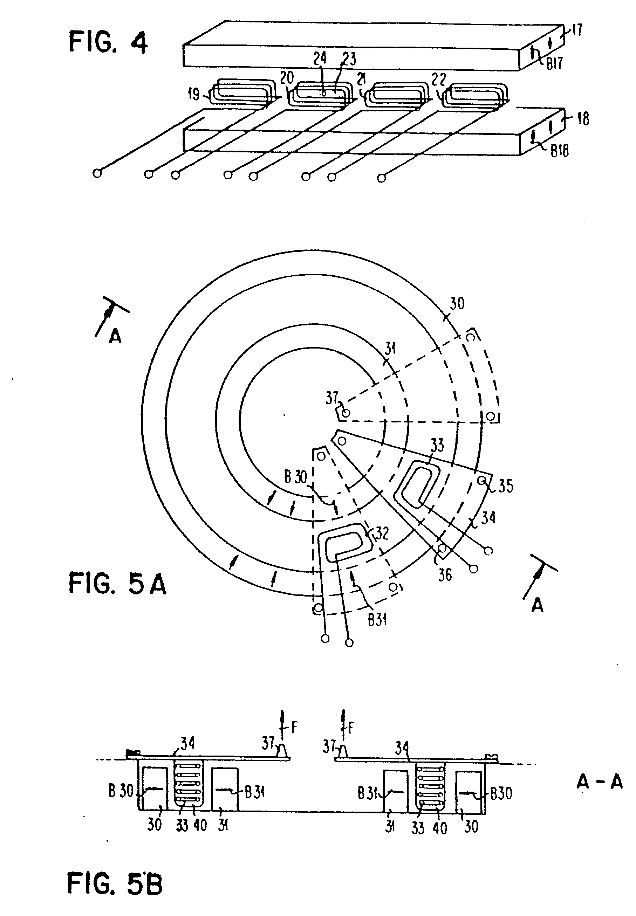

In Fig. 4 ist eine schematische Darstellung mehrerer Bewegungsspulen 19, 20, 21 und 22 gezeigt, welche zwischen zwei diesen Spulen gemeinsamen Permanentmagneten 17 und 18 mit entgegengesetzter Magnetisierungsrichtung B17 und B18 angeordnet sind. Die Tauchspulen 19 bis 22 werden separat erregt und unterliegen einer voneinander getrennten Bewegungsmöglichkeit. Die Halterung solcher Tauchspulen ist allgemein bekannt und wird deshalb im einzelnen nicht mehr beschrieben. Bei der in Fig. 4 gezeigten Ausführungsform ist es denkbar, die Tauchspulen in einem Plastikkörper 23 zu vergießen, welcher zur Führung auf einer Führungsachse mit einer Bohrung 24 versehen sein kann.

In den Fign. 5a und 5b ist eine konzentrische Anordnung zweier ringförmiger Magnete 31 und 30 gezeigt. Diese beiden Magnete haben eine entgegengesetzte Magnetisierungsrichtung, wie es durch die Pfeile B30 und B31 zu ersehen ist. Die Darstellung in Fig. 5a entspricht einer schematisierten Aufsicht, die in 5b einer schematisierten Schnittdarstellung gemäß der Schnittlinie A-A in Fig. 5a. Innerhalb des von den beiden ringförmigen Magneten 30 und 31 gebildeten Raumes sind Tauchspulen 32, 33 angeordnet, welche an einem Federsegmentelement 34 angeordnet sind. So kann z. B. die Tauchspule 33 in Kunststoff 40 vergossen mit dem Federsegmentelement 34 verbunden sein. Dieses Federsegmentelement 34 ist durch Befestigungselemente 35, 36 befestigt. Das zur Ringmitte hin verjüngenden Ende wird ausgelenkt. An diesem

0018477

Ende kann das Federsegmentelement mit einem Element 37 zur Ausführung von Druckanschlägen versehen werden. Die Auslenkung der Feder 34 wird durch Kraftwirkung der Spule 33 verursacht und erzeugt eine Kraftwirkung in Richtung des Pfeiles F für das am freien Ende der Feder angebrachten Druckelements 37.

GE 979 014E

- 9 -

## PATENTANSPRÜCHE

1. Tauchspulenantriebselement mit einer in einem Magnetfeld angeordneten elektrisch beaufschlagbaren Bewegungsspule,
dadurch gekennzeichnet,
daß die Bewegungsspule 3 zwischen zwei Magneten mit entgegengesetzter Magnetisierung angeordnet ist.

2. Anordnung nach Anspruch 1,
dadurch gekennzeichnet,
daß die Magnete ringförmig ausgebildet und konzentrisch angeordnet sind.

3. Anordnung nach einem der Ansprüche 1 bis 2,
dadurch gekennzeichnet,
daß mehrere Spulen (19 bis 22) im gleichen Magnetsystem angeordnet sind.

4. Anordnung nach einem der Ansprüche 1 bis 3,
dadurch gekennzeichnet,
daß die Spulen einen ausgefüllten Kern aus Isoliermaterial aufweisen.

FIG. 1

FIG. 2A

FIG. 2B

FIG. 3A

FIG. 3B

0018477

FIG. 4

FIG. 5 A

FIG. 5B

A – A

IBM - GE 979 014 E

| | | | |
|---|---|---|---|
| Europäisches Patentamt | **EUROPÄISCHER RECHERCHENBERICHT** | | Nummer der Anmeldung EP 80 10 1083 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 440 464 (R. TOLMIE)<br>* Spalte 3, Zeilen 44-53; Abbildung 1 *<br>-- | 1 |
| | US - A - 3 505 544 (C.J. HELMS)<br>* Spalte 3, Zeilen 28-53 *<br>-- | 1 |
| | BE - A - 539 902 (SCHUBERT & SALZER)<br>* Seite 4, Zeilen 9-25 *<br>-- | 1 |
| | FR - A - 1 453 203 (HELD)<br>* Seite 5, linke Spalte, Zeilen 4-18 *<br>-- | 1,3 |
| | US - A - 3 525 887 (D'EWART)<br>* Spalte 13, Zeilen 30-34; Abbildung 19 *<br>-- | 2 |
| | FR - A - 2 098 210 (JAPANESE NAT. RAILWAYS)<br>* Seite 4, Zeilen 20-28 *<br>---- | 3 |

**KLASSIFIKATION DER ANMELDUNG (Int.Cl. 3)**

H 02 K 33/18

**RECHERCHIERTE SACHGEBIETE (Int. Cl. 3)**

H 02 K 33/18
          41/02
          41/035
H 04 R  9/00
          9/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-06-1980 | TANGOCCI |

EPA form 1503.1   06.78